# EUROPEAN PATENT SPECIFICATION

(11) **EP 0 893 307 B1**
(45) Date of publication and mention of the grant of the patent: **02.01.2003**
(21) Application number: 98305855.3
(22) Date of filing: 22.07.1998
(51) Int. Cl.: B60R 7/02

(54) **Receptacle for use in vehicle luggage space**
Behälter für den Kofferraum eines Fahrzeuges
Récipient pour le coffre d'un véhicule

(30) Priority: 22.07.1997 GB 9715493
(43) Date of publication of application: 27.01.1999
(73) Proprietor: NISSAN EUROPEAN TECHNOLOGY CENTRE LIMITED, Sunderland, Tyne & Wear SR5 3ND (GB)
(72) Inventor: Gwinnutt, Nick, Broadlands, Lichfield, Staffs WA14 9SL (GB); Paterson, Craig, Olney, Bucks MK46 5HR (GB); Godsell, David, Berkhamsted, Herts HP4 2LR (GB)
(74) Representative: Godwin, Edgar James

(56) References cited:
- DE-A- 3 027 151
- DE-A- 19 616 963
- DE-U- 29 503 545
- US-A- 5 636 890

## Description

This invention relates to a receptacle for use in the luggage space of a vehicle such as an estate car or hatchback.

Objects which are carried loose in the luggage space of a vehicle can move about in the space during use of the vehicle. Furthermore if they are dirty they may contaminate the luggage space, which is usually provided with a soft trim that is not easy to clean. Objects may be carried in a container which can be secured in the luggage space, but such a container takes up valuable space when not in use, even if it is collapsible. If a well is provided in the floor of the luggage space, dirt and debris can accumulate in the well. Furthermore, with estate cars the luggage space is frequently not concealed and, hence, articles left in the luggage space are on full display when the vehicle is left unoccupied and, therefore, may be more susceptible to theft in comparison with articles left in enclosed luggage spaces.

What is desired is a receptacle which overcomes or mitigates the shortcomings of conventional luggage spaces in such vehicles.

DE 196 16 963 A discloses a reversible receptacle in accordance with the preamble of claim 1.

The present invention provides a reversible receptacle as set forth in claim 1.

The invention will be described further, by way of example, with reference to the accompanying drawings, in which:
Figure 1 is a schematic perspective view of the luggage space of a vehicle, with a reversible receptacle in its normal position;
Figure 2 is similar to Figure 1, but with the reversible receptacle in its inverted position;
Figure 3 is a perspective view of the receptacle;
Figure 4 is a section on line IV-IV in Figure 3;
Figure 5 is an exploded section through a corner of the receptacle, on an enlarged sale; and
Figures 6 to 8 are diagrammatic elevations of the receptacle, sequentially showing how it is inverted.

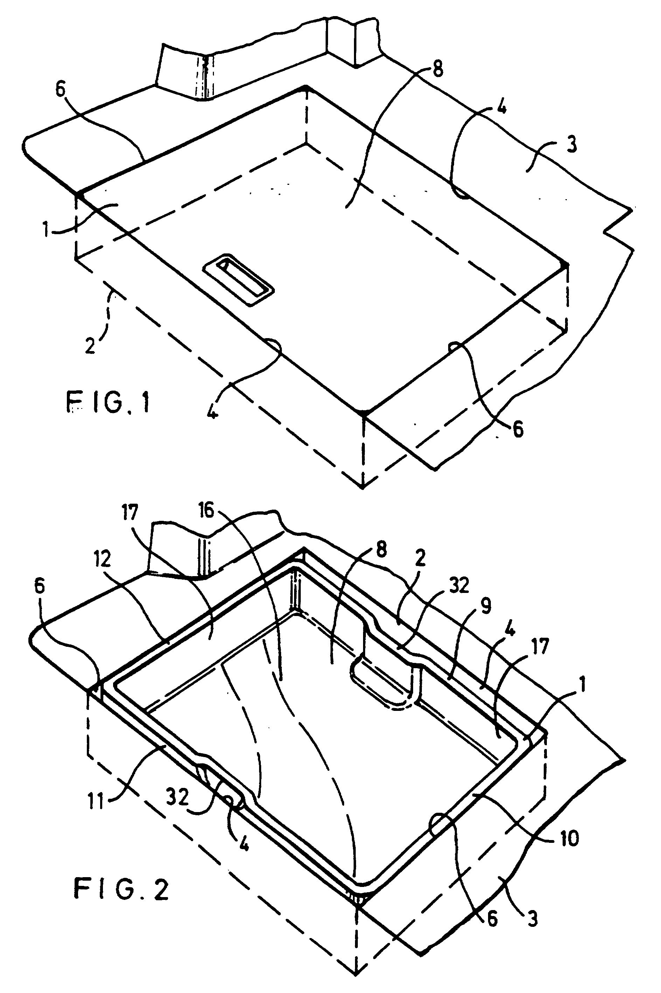

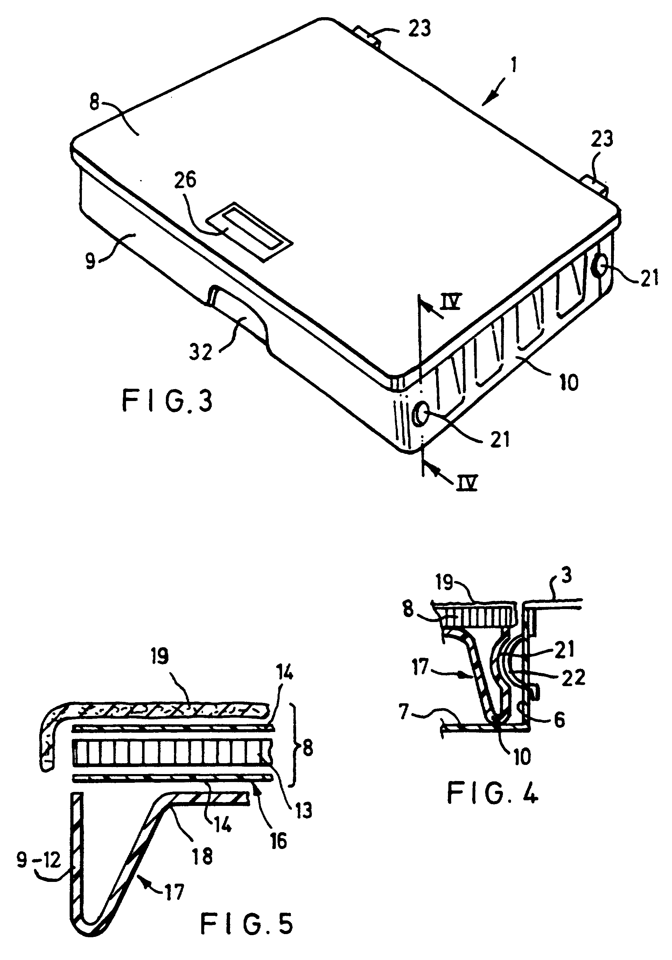

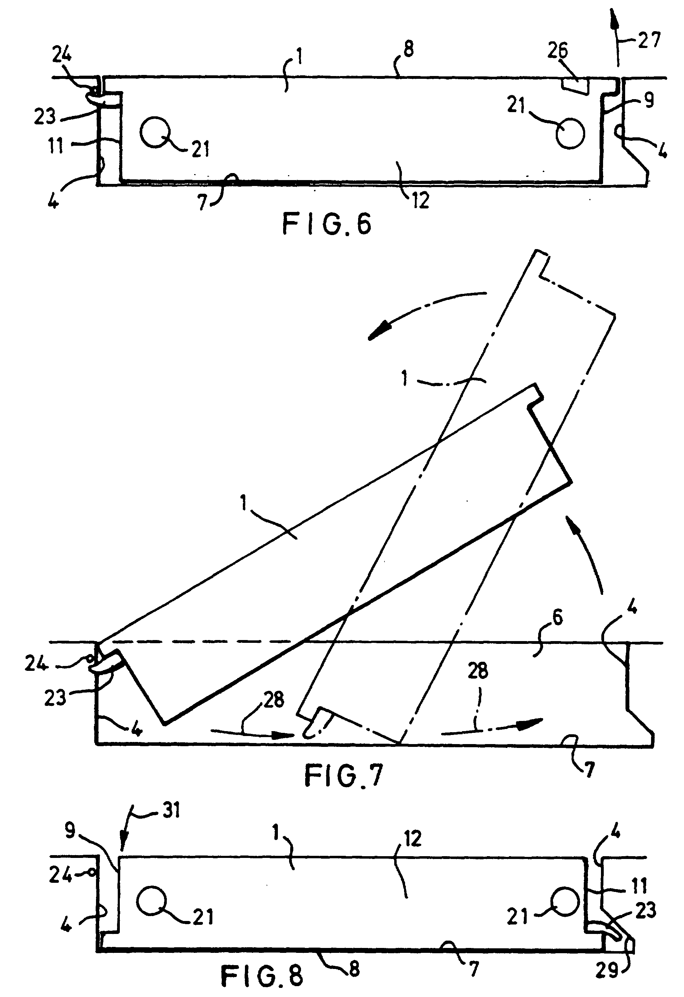

The reversible receptacle 1 shown in Figures 1 to 3 fits in a well 2 in the floor 3 of the luggage space in a vehicle, both in its normal position (Figure 1) and in its inverted position (Figure 2). The well 2 is rectangular in plan, with two longer sides 4 extending transversely of the vehicle and two shorter sides 6. The bottom 7 of the well is formed by the metal underfloor of the vehicle body. Although the bottom 7 is shown in Figures 6 to 8 as being level, it will in practice not be perfectly flat and the inverted receptacle will often be supported only by the peripheral edge regions of the bottom.

The receptacle 1 has a rigid load-bearing base 8 and rigid load-bearing walls 9,10,11,12 projecting downwards from the base 8 and constituting a closed perimeter. In the normal position (Figures 1 and 6) the base 8 is approximately flush with the floor 3, the long walls 9 and 11 are next to but spaced from the long sides 4 of the wall 2, the short walls 10 and 12 are close to the short sides 6 of the well, and the ends of the walls 9-12 rest on the bottom 7. In the inverted position (Figures 2 and 8), the receptacle 1 having been turned through 180° about an axis transverse to the vehicle, the base 8 rests on the bottom 7, the long walls 9 and 11 are spaced from the opposite long sides 4 of the well, the short walls 10 and 12 are close to the same short sides 6, and the ends of the walls 9-12 are approximately flush with the floor 3. Thus, in the normal position the base 8 of the receptacle forms a continuation of the luggage-supporting floor 3 and covers the well 2. In the inverted position the receptacle 1 constitutes a tray which can be used for carrying loose objects.

The base 8 is a composite laminate comprising a honeycomb structure 13 (with hexagonal, triangular, square, or random cells, for example) sandwiched between upper and lower skins 14. In the preferred embodiment the skins 14 are made of polypropylene and are reinforced with fibres of glass or other suitable material, and the honeycomb structure 13 is made of polypropylene. The walls 9-12 are constituted by hollow polypropylene injection mouldings which are pressed and ultrasonically welded to the base 8. The underside 16 of the base 8 and the inner sides 17 of walls 9-12 have smooth non-absorbent wipe-clean surfaces. The mouldings 9-12 are shaped to provide a rounded transition 18 between wall and base, for ease of cleaning. The outside of the base is constituted by a soft trim cover 19 matching the luggage floor 3, e.g. of woven or non-woven textile material.

The short walls 10 and 12 are provided with locating recesses 21 for releasable engagement with complementary locating spring catches 22 provided on the short sides 6 of the well 2. The recesses 21 are at mid-height of the receptacle 1 so that they are engageable with the catches 22 both in the normal position and in the inverted position.

Hook-like guide lugs 23 project forwards and upwards from beneath the front edge of the base 8 and engage under abutment pins 24 fixed in the front long side 4 of the well 2, thereby forming a separable hinge which helps to retain the receptacle 1 in the well 2.

The base 8 includes a handle formation 26 accessible from the outside of the base, to facilitate lifting of the receptacle 1 for the purpose of either inverting it or stowing objects under it. To invert the receptacle 1 the rear end of the base 8 is lifted by means of the handle formation 26, the receptacle pivoting upwards about the hinge (23,24) as indicated by the arrow 27 in Figure 6. Then, as the receptacle is pulled upwards, it is also pulled rearwards as indicated by the arrows 28 in Figure 7, separating the lugs 23 from the pins 24. Finally, the completely inverted receptacle is fitted into the well 2, the lugs 23 being accommodated in a recess 29 in the rear side 4 of the well and the opposite end of the receptacle being dropped into the well as indicated by the arrow 31. To return the receptacle to the normal position the above-described actions are reversed. Manipulation of the receptacle at or near its inverted position is facilitated by handle formations 32 on the long walls 9 and 11.

Various modifications may be made within the scope of the invention. For instance, the locating recess 21 may be provided on the side of the well 2 and the locating spring clip 22 may be provided on the wall of the receptacle 1. The rear wall 9 (for example) may be open in the middle (or omitted) to facilitate insertion of objects into the well 2 when the receptacle 1 is tilted up from its normal position.

The receptacle described above is light in weight but has sufficient strength to withstand the anticipated weight of luggage carried in the vehicle. The receptacle (both in its normal position and in its inverted position) prevents soiling of the well, and the interior of the receptacle can easily be wiped clean if it has been used to carry dirty objects. In the normal position the receptacle provides a soft-trimmed upper surface which blends into the surrounding floor trim, the only obvious sign of an additional feature being the handle formation in the base. In the inverted position the receptacle provides a considerable extra volume of storage space, particularly for wet or soiled items, e.g. clothing or footwear.

## Claims

1. A reversible receptacle (1) for fitting in a well (2) in the floor (3) of a luggage space in a vehicle, the receptacle (1) having a load-bearing base portion (8) and rigid load-bearing walls (9-12) projecting downwards from the underside of the base portion (8), the receptacle ( I ) being reversible from a normal position, in which the base portion (8) is substantially flush with the floor (3) of the luggage space and the walls (9-12) rest on the bottom (7) of the well (2), to an inverted position, in which the base portion (8) rests on the bottom (7) of the well (2), **characterised in that** the walls (9-12) are provided with locating means for releasable engagement with complementary locating means on sidewalls of the well (2), the locating means being provided at mid-height of the receptacle (1) so that the locating means are engageable with the complementary locating means both in the normal position and in the inverted position of the receptacle.

2. A reversible receptacle as claimed in claim 1, in which the underside (16) of the base portion (8) has a non-absorbent and/or smooth surface.

3. A reversible receptacle as claimed in claim 1 or 2, in which the outside of the base portion (8) is constituted by a soft trim cover (19).

4. A reversible receptacle as claimed in any preceding claim, in which the inside of each wall (9-12) has a non-absorbent surface.

5. A reversible receptacle as claimed in any preceding claim, in which the walls (9-12) constitute a closed perimeter.

6. A reversible receptacle as claimed in any preceding claim, in which the base portion (8) comprises a honeycomb structure (13) between upper and lower skins (14) which preferably contain reinforcing fibres.

7. A reversible receptacle as claimed in any of claims 1 to 6, in which the locating means comprise recesses (21).

8. A reversible receptacle as claimed in any of claims 1 to 6, in which the locating means comprise resiliently displaceable elements (22).

9. A reversible receptacle as claimed in any preceding claim, in which the base portion (8) includes a handle formation (26) accessible from the outside of the base portion.

10. A reversible receptacle as claimed in any preceding claim, in which at least one of the walls (9-12) is provided with a handle formation (32) accessible when the receptacle (1) is in its inverted position.

11. A reversible receptacle as claimed in any preceding claim, including guide lugs (23) projecting out from beneath one edge of the base portion, for engagement with abutments in the well to form a separable hinge.

## Patentansprüche

1. Umkehrbarer Behälter (1) zum Einsetzen in eine Vertiefung (2) in dem Boden (3) des Kofferraums eines Fahrzeugs, wobei der Behälter (1) einen last-tragenden Basisbereich (8) hat, und starre last-tragende Wände (9-12) hat, die von der Unterseite des Basisbereichs (8) nach unten vorspringen, wobei der Behälter (1) aus einer normalen Position, in der der Basisbereich (8) im wesentlichen bündig mit dem Boden (3) des Kofferraums ist und die Wände (9-12) auf dem Boden (7) der Vertiefung (2) aufliegen, umkehrbar ist in eine umgelcehrte Position, in der der Basisbereich (8) auf dem Boden (7) der Vertiefung (2) aufliegt, **dadurch gekennzeichnet, daß** die Wände (9-12) mit Aufnahmemitteln versehen sind für den freigebbaren Eingriff mit komplementären Aufnahmemitteln auf den Seitenwänden der Vertiefung (2), wobei die Aufhahmemittel auf halber Höhe des Behälters (1) vorgesehen sind, so daß sie sowohl in der normalen Position, als auch in der umgekehrten Position des Behälters mit den komplementären Aumahmemitteln in Eingriff gebracht werden können.

2. Umkehrbarer Behälter wie in Anspruch 1 beansprucht, bei dem die Unterseite (16) des Basisbereichs (8) eine nicht-absorbierende und/oder glatte Oberfläche hat.

3. Umkehrbarer Behälter wie in Anspruch 1 oder 2 beansprucht, bei dem die Außenseite des Basisbereichs (8) aus einer weichen Zierabdeckung (19) besteht.

4. Umkehrbarer Behälter wie in irgendeinem vorhergehenden Anspruch beansprucht, bei dem die Innenseite jeder Wand (9-12) eine nicht-absorbierende Oberfläche hat.

5. Unikehrbarer Behälter wie in irgendeinem vorhergehenden Anspruch beansprucht, bei dem die Wände (9-12) einen geschlossenen Umfang bilden.

6. Umkehrbarer Behälter wie in irgendeinem vorhergehenden Anspruch beansprucht, bei dem der Basisbereich (8) eine Wabenstruktur (13) zwischen einer oberen und unteren Haut (14), die vorzugsweise Verstärkungsfasern enthalten, aufweist.

7. Umkehrbarer Behälter wie in irgendeinem der Ansprüche 1 bis 6 beansprucht, bei dem die Aufhahmemittel Aussparungen (21) aufweisen.

8. Umkehrbarer Behälter wie in irgendeinem der Ansprüche 1 bis 6 beansprucht, bei dem die Aufnahmemittel elastisch verschiebbare Elemente (22) aufweisen.

9. Umkehrbarer Behälter wie in irgendeinem vorhergehenden Anspruch beansprucht, bei dem der Basisbereich (8) eine von der Außenseite des Basisbereichs zugängliche Griffstruktur (26) umfaßt.

10. Umkehrbarer Behälter wie in irgendeinem vorhergehenden Anspruch beansprucht, bei dem mindestens eine der Wände (9-12) mit einer Griffstruktur (32) versehen ist, die zugänglich ist, wenn der Behälter (1) in seiner umgekehrten Position ist.

11. Umkehrbarer Behälter wie in irgendeinem vorhergehenden Anspruch beansprucht, umfassend Führungsansätze (23), die unterhalb eines Randes des Basisbereichs vorspringend zwecks Eingriff mit Widerlagern in der Vertiefung, um ein trennbares Scharnier zu bilden.

## Revendications

1. Logement réversible (1) destiné à s'insérer dans un coffre (2) dans le plancher (3) d'un compartiment à bagages dans un véhicule, le logement (1) possédant une portion de base (8) supportant la charge et des parois rigides (9 - 12) supportant la charge faisant saillie vers le bas par rapport au côté inférieur de la portion de base (8), le logement (1) étant réversible entre une position normale dans laquelle la portion de base (8) vient se disposer essentiellement à fleur avec le plancher (3) du compartiment à bagages et dans laquelle les parois (9 - 12) s'appuient sur la partie inférieure (7) du coffre (2), et une position inversée dans laquelle la portion de base (8) s'appuie sur la partie inférieure (7) du coffre (2), **caractérisé en ce que** les parois (9 - 12) sont munies de moyens de localisation destinés à entrer en contact amovible avec des moyens de localisation complémentaires prévus sur les parois latérales du coffre (2), les moyens de localisation étant prévus à mi-hauteur du logement (1) de telle sorte que les moyens de localisation sont à même d'entrer en contact avec les moyens de localisation complémentaires à la fois dans la position normale et dans la position inversée du logement.

2. Logement réversible selon la revendication 1, dans lequel le côté inférieur (16) de la portion de base (8) possède une surface non absorbante et/ou lisse.

3. Logement réversible selon la revendication 1 ou 2, dans lequel le côté externe de la portion de base (8) est constitué d'un recouvrement de garniture intérieure souple (19).

4. Logement réversible selon l'une quelconque des revendications précédentes, dans lequel le côté interne de chaque paroi (9 - 12) possède une surface non absorbante.

5. Logement réversible selon l'une quelconque des revendications précédentes, dans lequel les parois (9 - 12) constituent un périmètre fermé.

6. Logement réversible selon l'une quelconque des revendications précédentes, dans lequel la portion de base (8) comprend une structure en nid d'abeilles (13) entre des peaux supérieure et inférieure (14) qui contiennent de préférence des fibres de renforcement.

7. Logement réversible selon l'une quelconque des revendications 1 à 6, dans lequel les moyens de localisation comprennent des évidements (21).

8. Logement réversible selon l'une quelconque des revendications 1 à 6, dans lequel les moyens de localisation comprennent des éléments (22) aptes à se déplacer par résilience.

9. Logement réversible selon l'une quelconque des revendications précédentes, dans lequel la portion de base (8) englobe une structure de poignée (26) accessible depuis l'extérieur de la portion de base.

10. Logement réversible selon l'une quelconque des revendications précédentes, dans lequel au moins une des parois (9 - 12) est munie d'une structure de poignée (32) accessible lorsque le logement (1) se trouve dans sa position inversée.

11. Logement réversible selon l'une quelconque des revendications précédentes, englobant des nervures de guidage (23) faisant saillie depuis un endroit situé en dessous d'un bord de la portion de base, destinées à entrer en contact avec des butées dans le coffre pour former une articulation séparable.
